# EUROPÄISCHE PATENTSCHRIFT

(11) **EP 1 121 546 B1**
(45) Veröffentlichungstag und Bekanntmachung des Hinweises auf die Patenterteilung: **10.03.2004**
(21) Anmeldenummer: 99948918.0
(22) Anmeldetag: 01.10.1999
(51) Int. Cl.: F16J 15/06

(54) **DICHTSYSTEM ZUR SPALTFREIEN DICHTUNG ZWISCHEN RUHENDEN BAUTEILEN**
SEALING SYSTEM FOR PROVIDING A GAP-FREE SEAL BETWEEN STATIONARY STRUCTURAL PARTS
SYSTEME D'ETANCHEITE POUR ASSURER UNE ETANCHEITE SANS ESPACE ENTRE DES ELEMENTS CONSTITUTIFS STATIQUES

(30) Priorität: 13.10.1998 DE 19847207
(43) Veröffentlichungstag der Anmeldung: 08.08.2001
(73) Patentinhaber: Pall Corporation, East Hills, New York 11548 (US)
(72) Erfinder: KRIEG, Dieter, D-73566 Bartholomä (DE); PONGRATZ, Elmar, D-73557 Mutlangen (DE)
(74) Vertreter: Riedel, Peter, Dipl.-Ing.
(86) Internationale Anmeldenummer: PCT/EP1999/007305
(87) Internationale Veröffentlichungsnummer: WO 2000/022325

(56) Entgegenhaltungen:
- EP-A- 0 117 381
- GB-A- 780 743
- GB-A- 902 690
- US-A- 2 964 030
- US-A- 5 433 454

## Beschreibung

Die Erfindung betrifft ein lösbares, spaltfreies Dichtsystem zwischen ruhenden Bauteilen, insbesondere ein aseptisches Dichtsystem zur Abdichtung eines Produktraumes nach den Merkmalen des Oberbegriffs des Patentanspruchs 1.

Ein derartiges System ist z.B. aus der EP-A-0 117 381 oder US-A-5 433 454 bekannt.

Weiter sind Verbindungen mit Dichtungen als Flach- oder Formdichtungen mannigfaltig bekannt, wobei die Dichtflansche mit glatter Arbeitsleiste, mit Nut und Feder oder mit Eindrehungen verschiedenen Querschnitts versehen sind. Die Dichtelemente bestehen aus verschiedenen Werkstoffen wie Zellstoff, Papier, Gummi, Kunststoffe oder Metallen wie Weichkupfer, Aluminium oder Weicheisen. Ein Dichtsystem zur spaltfreien Dichtung zwischen ruhenden Bauteilen als Rohrflanschverbindung ist der DIN 11864, Teil 2 zu entnehmen. Zwei Ausführungsbeispiele einer Aseptik-Flanschverbindung mit einem O-Ring und einer Formdichtung als Dichtelement sind dieser Schrift entnehmbar. Die Flansche sind mit nahezu halbkreisförmigen bzw. rechteckförmigen Eindrehungen dicht unterhalb der dem Produktraum zugewandten Flanschoberflächen versehen. Damit die Dichtelemente in einem Flanschteil eingelegt werden können, sind die Flansche mit Federn versehen, die wiederum paßgenau in Nuten des jeweils zweiten Flanschteiles passen. Die Eindrehungen, in welchen die Dichtelemente verankert sind, sind als Rücksprünge auf der Produktraumseite des Flansches ausgebildet. Hierdurch ergibt sich ein Spalt zum Produktraum hin, der durch das Fließen des Dichtelements zum Produktraum hin verschlossen wird. Die gezeigten Dichtsysteme setzen sehr hohe Paßgenauigkeit der Flansche, insbesondere, wenn Formdichtungen angewandt werden, voraus. Die Formdichtungen ihrerseits müssen sehr maßhaltig sein. Zudem ergeben sich bei diesen Ausführungsformen der Flansche hohe Vorpreßkräfte.

Der Erfindung liegt die Aufgabe zugrunde, ein Dichtsystem zur spaltfreien Dichtung zwischen ruhenden Bauteilen, insbesondere ein aseptisches Dichtsystem, zum Abdichten eines Produktraumes zu schaffen, welches zur Abdichtung beliebiger Komponenten von Behältern und Rohrleitungen geeignet ist.

Diese Aufgabe wird erfindungsgemäß mit den Merkmalen des Patentanspruchs 1 gelöst.

Im Rahmen der vorliegenden Erfindung ist es vorgesehen, ein aseptisches, spaltfreies Dichtsystem zu schaffen, das sich sowohl zur spaltfreien Verbindung von Rohren als auch zur Verbindung von Apparatebauteilen, wie beispielsweise eines Bodens eines Einschichtfilters mit der Wand dessen eignet. Das spaltfreie, aseptische Dichtsystem sollte somit unabhängig von dem Winkel, welche die in Verbindung gebrachten Apparate-, Behälter- oder Rohrbauteile zueinander beschreiben, anwendbar sein und keine von Produkt nicht in einfacher Weise reinigbaren Toträume aufweisen. Erfindungsgemäß wird dies durch die Anordnung des Dichtelements näher an der mit dem Produkt in Berührung kommenden Flanschoberflächen erreicht. Die das Dichtelement aufnehmende Eindrehung in den Flanschbauteilen ist dabei so gestaltet, daß im einen Bauteil ein Rücksprung und im anderen Bauteil ein Vorsprung eingedreht ist. Werden die beiden Bauteile miteinander verbunden, so bleibt - läßt man das Dichtelement fort - ein zum Produktraum hin gewollt großer Spalt, der erst durch das eingelegte Dichtelement geschlossen wird. Auf diese Weise ist gewährleistet, daß bei zusammengefügten Bauteilen und eingelegtem Dichtelement kein Spalt zwischen den Bauteilen produktraumseitig zurück bleibt. Somit sind aseptische Verhältnisse beispielsweise auch an der rechtwinkligen Verbindungsstelle von Seitenwand und Boden eines Einschichtfilters möglich, da dieser Bereich wirkungsvoll mittels des Dichtelementes gegen den das Produkt führenden bzw. enthaltenden Hohlraum abgedichtet ist.

Ausführungsbeispiele des Gegenstandes der Erfindung sind in den Zeichnungen veranschaulicht. Es zeigen:
- Fig. 1: eine Ansicht eines ringförmigen Blockflansches mit einem lösbaren, spaltfreien Dichtsystem,
- Fig. 2: einen Schnitt durch den ringförmigen Blockflansch aus Fig. 1,
- Fig. 3: den Dichtungsbereich als Einzelheit in vergrößerter Darstellung,
- Fig. 4: einen Schnitt durch ein lösbares, spaltfreies Dichtsystem zwischen Wand und Boden eines Einschichtfilters.

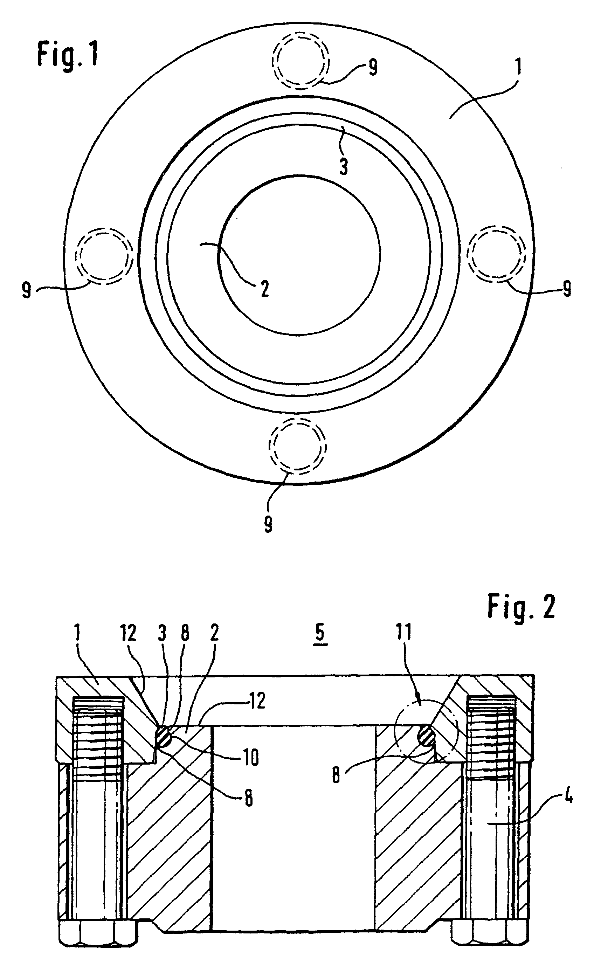

In der schematischen Darstellung nach Fig. 1 sind ein erstes Bauteil 1 mit vier Gewindebohrungen mit Innengewinde 9 sowie ein zweites Bauteil 2 gezeigt, wobei beide Bauteile konzentrisch im Dichtungsbereich geführt sind. Zwischen dem ersten Bauteil 1 und dem zweiten Bauteil 2 ist ein Dichtelement 3 eingelegt, das, wie zu erkennen, mit einem Teil seiner Oberfläche direkt den Produktraum 5 tangiert.

Fig. 2 zeigt die Bauteile 1 und 2 mittels Kopfschraubenbolzen 4 verschraubt. Das Dichtelement 3 ist hierbei in der Dichtfläche 10 insbesondere durch den wulstförmig ausgebildeten gratfreien Übergang 8 der Dichtfläche 10 in die Flanschoberfläche 12 gehalten. Wie zu erkennen ist, sind die Bauteile 1 und 2 im Dichtungsbereich in einer Gleitpassung geführt. Beim Zusammenfügen der Bauteile 1 und 2 wird das Dichtelement 3 zumindest nicht nennenswert, abschließend jedoch durch die Dichtfläche 10 des Bauteils 1 auf Druck und Scherung beansprucht.

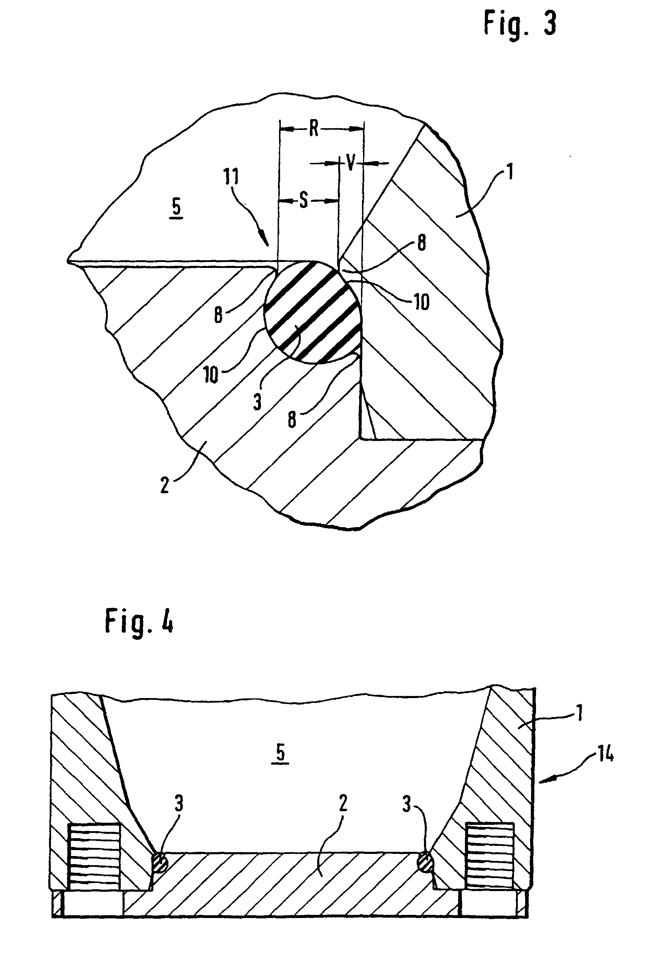

Fig. 3 zeigt den Dichtungsbereich als Einzelheit. Wie deutlich zu erkennen ist, wird die Spaltfreiheit zwischen den Bauteilen 1 und 2 dadurch erreicht, indem das Dichtelement 3 mit einem Teil seiner Oberfläche, der Dichtkante 11, die zwischen dem wulstförmigen Vorsprung V des ersten Bauteils 1 und dem wulstförmigen gratfreien Übergang 8 des mit einem Rücksprung R versehenen Bauteils 2 liegt, direkt in Berührung mit dem Produktraum 5 steht. Dadurch werden Spalte zwischen den Bauteilen 1 und 2, welche nicht vom Dichtelement 3 überdeckt werden, verhindert. Dadurch, daß die Dichtflächen 10 drallfrei geschliffen sind, ist zudem gewährleistet, daß das Dichtelement 3 an allen Punkten des Flansches unter gleichem Druck steht und somit die Dichtkante 11 gleichförmig ausgebildet ist. Das Dichtelement 3 wird vom Herausspringen aus den Dichtflächen 10 durch den Vorsprung V des Bauteils 1 und den wulstförmigen gratfreien Übergang 8 des Bauteils 2 gehindert. Es ergeben sich im Dichtungsbereich somit aseptische Verhältnisse. Das Dichtelement 3 ist vorteilhafterweise ein PTFE-beschichteter Elastomer oder besteht ganz aus PTFE. Anstatt des in Fig. 3 gezeigten O-Ringes kann das Dichtelement 3 auch eine Formdichtung beliebigen Querschnitts sein.

Fig. 4 zeigt ein Dichtsystem zur spaltfreien Dichtung zwischen der Wand 1 und dem Boden 2 eines Einschichtfilters 14, wobei der Produktraum 5 aseptisch abgedichtet wird. Das Dichtelement 3 ist hier als O-Ring dargestellt.

## Patentansprüche

1. Dichtsystem zur spaltfreien Dichtung zwischen ruhenden Bauteilen, insbesondere aseptisches Dichtsystem, zum Abdichten eines Produktraumes (5) mit zumindest einem ersten Bauteil (1) und einem zweiten Bauteil (2), wobei beide Bauteile (1, 2) flanschartig miteinander an Flanschoberflächen (12) verbunden sind, und mit zumindest einem zwischen Dichtflächen (10) der Bauteile (1, 2) spaltfrei eingelegten Dichtelement (3),
wobei die Dichtflächen (10) drallfrei gedreht sind und ein gratfreier Übergang (8) der Flanschoberflächen (12) in die Dichtflächen (10) als Dichtlinie vorgesehen ist.

2. Dichtsystem nach Anspruch 1,
**dadurch gekennzeichnet, daß** das erste Bauteil (1) und das zweite Bauteil (2) im Dichtungsbereich in einer Gleitpassung geführt sind und bei verbundenem Zustand das Dichtelement (3) durch die Dichtfläche (10) des ersten Bauteils (1) auf Druck und Scherung beansprucht ist.

3. Dichtsystem nach Anspruch 1 oder 2,
**dadurch gekennzeichnet, daß** die beiden Bauteile (1, 2) blockflanschartig verbunden sind.

4. Dichtsystem nach Anspruch 1,
**dadurch gekennzeichnet, daß** eine Dichtkante (11) zusammen mit den Flanschoberflächen (12) den Produktraum (5) abschließen.

5. Dichtsystem nach Anspruch 1,
**dadurch gekennzeichnet, daß** der gratfreie Übergang (8) wulstförmig ausgebildet ist.

6. Dichtsystem nach Anspruch 1,
**dadurch gekennzeichnet, daß** das Dichtsystem zum aseptischen Abdichten eines Einschichtfilters (14) zwischen dessen Wand (1) und Boden (2) angeordnet ist.

7. Dichtsystem nach Anspruch 1,
**dadurch gekennzeichnet, daß** das Dichtelement (3) ein PTFE-beschichteter Elastomer ist.

8. Dichtsystem nach Anspruch 1,
**dadurch gekennzeichnet, daß** das Dichtelement (3) eine Formdichtung ist.

9. Dichtsystem nach Anspruch 1,
**dadurch gekennzeichnet, daß** das erste Bauteil (1) einen Vorsprung (V) und das zweite Bauteil (2) einen Rücksprung (R) im Dichtungsbereich haben und im verbundenen Zustand der Bauteile (1, 2) zwischen dem Vorsprung (V) und dem Rücksprung (R) ein Abstand (S) gebildet ist.

## Claims

1. Sealing system for providing a gap-free seal between stationary components, in particular an aseptic sealing system for sealing a product chamber (5), comprising at least a first component (1) and a second component (2), the two components (1, 2) being joined to one another in a flange-type arrangement at flange surfaces (12), and at least one sealing element (3) is inserted in a gap-free arrangement between sealing surfaces (10) of the components (1, 2), the sealing surfaces (10) being ground so as to be twist-free and a burr-free transition (8) being provided as a sealing line where the flange surfaces (12) merge into the sealing surfaces (10).

2. Sealing system as claimed in claim 1,
**characterised in that** the first component (1) and the second component (2) are guided in a sliding fit in the sealing region and, in the joined state, the sealing element (3) is pressurised by the sealing surface (10) of the first component (1) to produce compression and shearing forces.

3. Sealing system as claimed in claims 1 or 2,
**characterised in that** the two components (1, 2) are joined in a lock-flange arrangement.

4. Sealing system as claimed in claim 1,
**characterised in that** a sealing edge (11) in conjunction with the flange surfaces (12) seal off the product chamber (5).

5. Sealing system as claimed in claim 1,
**characterised in that** the burr-free transition (8) is bead-shaped.

6. Sealing system as claimed in claim 1,
**characterised in that** the sealing system is used to seal a single-layer filter (14), being disposed between the wall (1) and base (2) thereof.

7. Sealing system as claimed in claim 1,
**characterised in that** the sealing element (3) is a PTFE-coated elastomer.

8. Sealing system as claimed in claim 1,
**characterised in that** the sealing element (3) is a shaped seal.

9. Sealing element as claimed in claim 1,
**characterised in that** the first component (1) has a projection (V) and the second component (2) has a recess (R) in the sealing area and a distance (S) is formed between the projection (V) and the recess (R) when the components (1, 2) are in the assembled state.

## Revendications

1. Système d'étanchéité pour assurer une étanchéité sans fente entre des éléments constitutifs statiques, en particulier un système d'étanchéité aseptique, pour l'étanchéité d'un espace à produit (5) avec au moins un premier élément constitutif (1) et un second élément constitutif (2), sachant que les deux éléments constitutifs (1, 2) sont reliés entre eux à la façon d'une bride sur des surfaces de bride (12), et avec au moins un élément d'étanchéité introduit sans fente entre des surfaces d'étanchéité (10) des éléments constitutifs (1, 2), les surfaces d'étanchéité (10) étant tournées sans torsion et un passage (8) sans bavure des surfaces de bride (12) aux surfaces d'étanchéité (10) étant prévu comme ligne d'étanchéité.

2. Système d'étanchéité selon la revendication 1, **caractérisé en ce que** le premier élément constitutif (1) et le second élément constitutif (2) sont guidés dans la zone d'étanchéité dans un ajustement glissant et l'élément d'étanchéité (3) est sollicité dans l'état relié au niveau de la pression et du cisaillement par la surface d'étanchéité (10) du premier élément constitutif (1).

3. Système d'étanchéité selon la revendication 1 ou 2,
**caractérisé en ce que** les deux éléments constitutifs (1, 2) sont reliés à la façon d'une bride folle.

4. Système d'étanchéité selon la revendication 1, **caractérisé en ce qu'**une arête d'étanchéité (11) ferme l'espace à produit (5) conjointement avec des surfaces de bride (12).

5. Système d'étanchéité selon la revendication 1, **caractérisé en ce que** la transition (8) sans bavure est conçue en forme de renflement.

6. Système d'étanchéité selon la revendication 1, **caractérisé en ce que** le système d'étanchéité pour l'étanchéité aseptique d'un filtre monocouche (14) est disposé entre sa paroi (1) et son fond (2).

7. Système d'étanchéité selon la revendication 1, **caractérisé en ce que** l'élément d'étanchéité (3) est un élastomère recouvert de polytétrafluoréthylène.

8. Système d'étanchéité selon la revendication 1, **caractérisé en ce que** l'élément d'étanchéité (3) est un joint moulé.

9. Système d'étanchéité selon la revendication 1, **caractérisé en ce que** le premier élément constitutif (1) a une partie en saillie (V) et le second élément constitutif (2) une partie en retrait (R) dans la zone d'étanchéité et un espacement (S) est formé entre la partie en saillie (V) et la partie en retrait (R) dans l'état relié des éléments constitutifs (1, 2).
